# EUROPEAN PATENT APPLICATION

(11) **EP 0 823 695 A2**
(43) Date of publication of application: **11.02.1998**
(21) Application number: 97305974.4
(22) Date of filing: 06.08.1997
(51) Int. Cl.: G07F 7/08, G07F 19/00

(54) **Charging system**

(30) Priority: 06.08.1996 GB 9616530; 31.01.1997 GB 9701997
(71) Applicant: Dawe, Peter John, Oakington, Cambridge CB4 5AG (GB)
(72) Inventor: Dawe, Peter John, Oakington, Cambridge CB4 5AG (GB)
(74) Representative: Musker, David Charles

(57) **Abstract**

A device for storing electronic cash and effecting electronic cash transactions, comprising a first memory means (13); characterised in that, said device is arranged to decrement each transaction amount by a value, in a separate operation from said transaction, and the electronic cash total stored in said first memory means (13) corresponds to said decremented transaction amount.

## Description

This invention relates to a method and apparatus for the levying of a charge, particularly but not exclusively a tax, on transactions using electronic cash.

Over recent years the way in which people make payments to each other and for goods and services have changed significantly away from cash or cheque payments to electronic credit or cash transactions.

As the global electronics and communications infrastructure has grown, so has the research and development into electronic methods of payment.

EP 0518365 A2 and EP 0391261 A2 present an example of an electronic cash system and a method and apparatus for implementing electronic cash, respectively.

Many trials have recently been conducted based on such technology, for example the MONDEX (TM) trial in Swindon, UK.

The MONDEX (TM) system utilises a smart card which can be loaded with electronic cash representing up to five chosen currencies from an automated teller machine (ATM). The card can be used at specially adapted British Telecom payphones and at shops equipped with MONDEX (TM) enabled tills, where it is slotted into a reader which effects the transaction once the personal identification number (PIN) of the user has been entered.

Each card is provided with a key ring reader so that the user can see how much electronic cash remains on the card. Additionally, there is an optional electronic wallet or purse, which can transfer cash between cards and lists the last ten transactions.

In other countries similar systems have already been established (for example the Digicash system of electronic payment, "E-Cash" which is operated by the Mark Twain Bank of the USA), and in Singapore and Finland "smart card" based systems are now in use.

The rapid growth in electronic cash payment has occurred for several reasons. Since electronic cash can be implemented so as to be divisible down to the lowest denomination of a currency, and since payments can be made at high speed, it is an extremely convenient means of payment. Additionally, electronic cash provides a significant degree of "privacy" as audit trails are, depending upon the individual system, difficult if not impossible to establish.

Currently, it is generally small value transactions for which electronic cash payment is used. However, as confidence grows in the reliability of such systems it is foreseen that the value of electronic cash transactions will increase. In Finland, for example, it is expected that by the year 2000 more than 30% of the total of cash transactions will be accounted for by electronic means.

An important difference between electronic cash and other payment methods is that electronic cash will not be under the control of a central financial authority. Instead it will be generated or "minted" by a variety of organisations, including companies, who will be responsible for keeping their own electronic cash secure and valuable. Because of this, combined with the fact that electronic cash transactions may be anonymous and untraceable, the difficulty of monitoring such transactions for taxation purposes will be significantly increased.

Thus the traditional approach taken taxation will become increasingly difficult to achieve.

Accordingly, the present invention provides a device for storing electronic cash, which can be used to effect an electronic cash transaction, comprising a first memory means; characterised in that, upon undertaking a transaction, the transaction amount is decremented by a value, in a separate operation from said transaction, and the electronic cash total stored in said first memory means corresponds to said decremented transaction amount.

In one aspect of the invention, smart cards which "leak" upon undertaking an electronic cash payment are used, thereby implementing a transaction tax.

Thus, for every payment made, a second quantity of electronic cash is debited from the electronic cash memory means resident on the smart card. This can either be by way of a fixed value per transaction or a percentage of the transaction value; indeed any suitable taxation scheme can be used.

In a simple embodiment of this aspect of the invention, the tax authority estimates the rate at which electronic cash is levied, based on the rate at which it enters circulation. The tax "paid" on the estimated transactions is then regenerated electronically by the tax authority.

The object of the present invention can also be achieved if the taxation process is implemented on incoming payments as opposed to outgoing payments. Therefore, according to this alternative aspect of the invention, the smart card of the payee will receive the transaction value of electronic cash from the payer device, such as an ATM in full. However, only part of this value is made accessible to the user of the smart card since the remainder, representing tax paid on the transaction, is deleted. This process may occur either before or after the incoming payment has been stored in the electronic cash memory means resident on the smart card.

In another aspect of the invention, any taxable operation, using the smart card either to make or receive electronic cash payments, will cause the taxable element of the transaction to be stored in a second electronic cash memory means resident on the smart card. This second electronic cash memory means is not accessible to the user of the smart card and the value therein represents the cumulative tax on the transactions undertaken with the smart card.

The second memory means may be a discrete memory means or it may be a partitioned area in the first electronic cash memory means. It will give confirmation of the total quantity of cash spent on the smart card to the tax authority and may be used by the user of the smart card, in conjunction with personal records of payments made, to claim any tax rebates which are owing.

In a further aspect of the invention, the value of electronic cash in the second, inaccessible memory means resident in the smart card is transferred to the taxation authority by a suitable communication means. This could be effected, for example, by the act of reloading a smart card, depleted of electronic cash, from an ATM.

Thus, while electronic cash is being downloaded from the user's electronic bank account to the user's smart card, the taxable elements of previous transactions are transferred from the second memory means resident on the smart card, to the bank account of the taxation authority.

Therefore, in this aspect of the invention the electronic tax is recycled for subsequent use. This provides two advantages over the simple "leakage" system. Firstly, it allows the taxation authority to have accurate information of the tax paid. Secondly, by avoiding the situation in which electronic cash leaves circulation undocumented, the task of detecting fraud is facilitated, as it is then possible to verify that no electronic cash is spent more than once.

In a further aspect of the invention, devices other than smart cards may be used to implement the invention.

Firstly a known type of electronic purse may be used in conjunction with a smart card. Such devices contain a "reader" which can indicate the value of electronic cash present on a smart card. An electronic purse can be used to transfer electronic cash funds to and from its associated smart card or indeed to the smart card of a further individual.

Thus, as electronic funds are transferred from the electronic purse to any smart card a taxation process is simultaneously implemented. As has already been discussed, the taxation process could be in the form of a leakage or a transfer from a first accessible electronic cash memory means to a second, inaccessible electronic cash memory means; where both memory means are resident in the electronic purse. The taxation process may be implemented on receipts instead of payments, or indeed both payments and receipts simultaneously.

Secondly, the present invention may be implemented through the use of hardware or software or both, in conjunction with a computer linked to the Internet or other computer network, to tax electronic cash payments made over the network. The functionality of this aspect of the invention is the same as that in previous aspects of the invention in all respects other than the remote nature of the transactions.

In a further aspect of the invention, exemption from the transaction tax can be implemented on selected transactions, for example the purchase of staple goods. This is achieved through the programming of the hardware used to carry out such transactions in such a manner as to cause no tax payment to be made.

This present aspect of the invention in a similar way allows for differing tax rates to be set for different types of transactions.

In yet a further aspect of the invention the issuing authority of the electronic cash and the manufacturers of the system hardware, or any other body entitled to do so, may use the same methods as previously described to charge the users of the electronic cash system for its use. This may occur in conjunction with the electronic cash expenditure tax. Therefore, several charges including a transaction tax, may be levied on any one expenditure.

Other aspects and preferred embodiments of the invention will be apparent from the following description and claims.

Embodiments of the invention will now be described in greater detail by way of example only with reference to the accompanying drawings in which:
Fig. 1 is a block diagram showing the elements of an electronic cash system of a first embodiment of the invention.
Fig. 2 is a block diagram showing the elements required in a smart card for implementing the electronic cash taxation mechanism;
Fig. 3 is a flow diagram showing the steps of an electronic cash transaction in which a tax on expenditure is paid;
Fig. 4 is a block diagram showing the elements required in a smart card for implementing a further embodiment of the electronic cash taxation mechanism;
Fig. 5 is a flow diagram showing the steps of transmitting the tax paid on transactions using a smart card to a bank account of the taxation authority via an ATM;
Fig. 6 is a flow diagram showing the steps of an electronic cash transaction in which a tax on expenditure is paid by the receiving device in the transaction; and
Fig. 7 shows the required elements in an electronic purse to implement the electronic cash taxation mechanism.

### FIRST EMBODIMENT

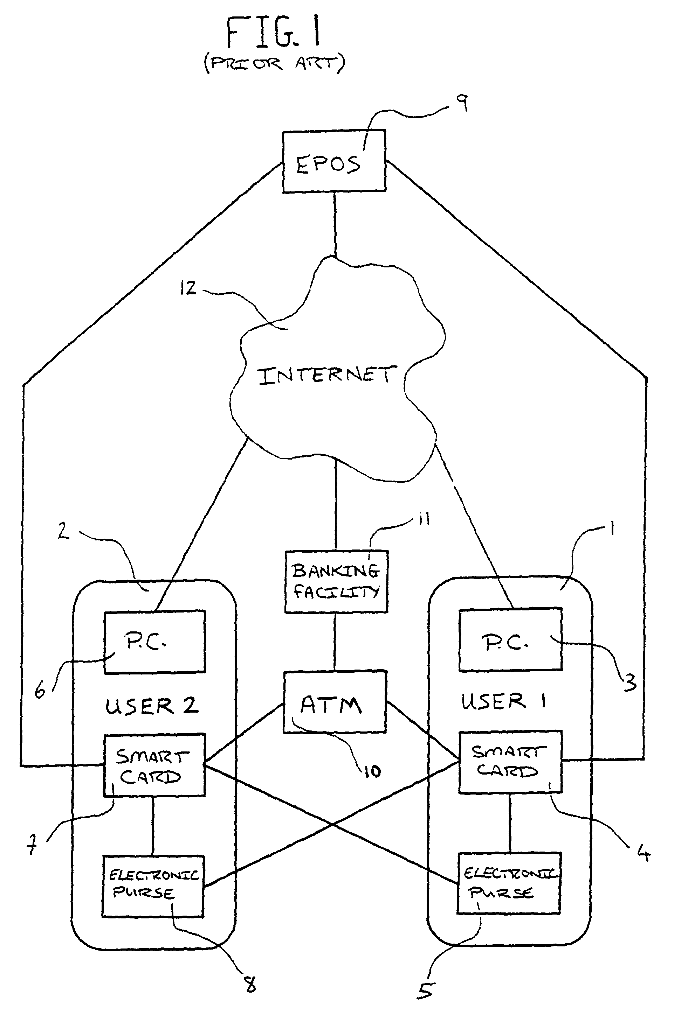

Referring to Fig. 1, two electronic cash users are shown, User 1,1 and User 2,2 which possess personal computers (PC), 3 and 6, smart cards, 4 and 7, and electronic purses, 5 and 8 respectively. The interconnections between these items and electronic point of sale apparatus (EPOS), 9 an ATM, 10 an electronic banking facility, 11 and the internet, 12 are also illustrated. In a first embodiment the present invention provides a means of taxing an electronic cash payment made by a first user, 1, using a smart card 4, to an EPOS 9.

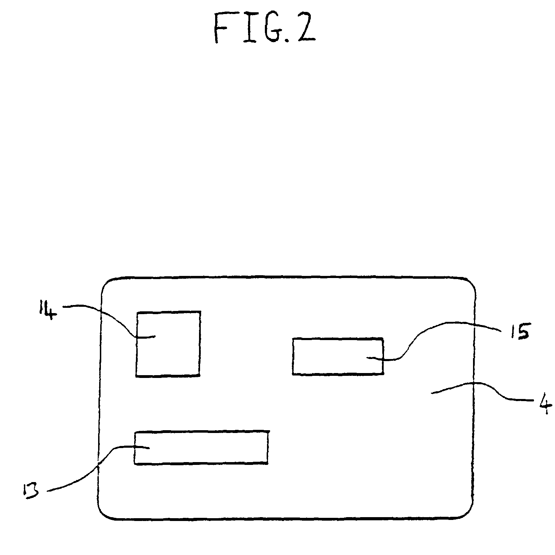

Referring to Fig. 2, a smart card 4 is illustrated comprising an electronic cash memory means 13, a microprocessor 14, and a non-volatile memory, such as Read Only Memory (ROM) 15.

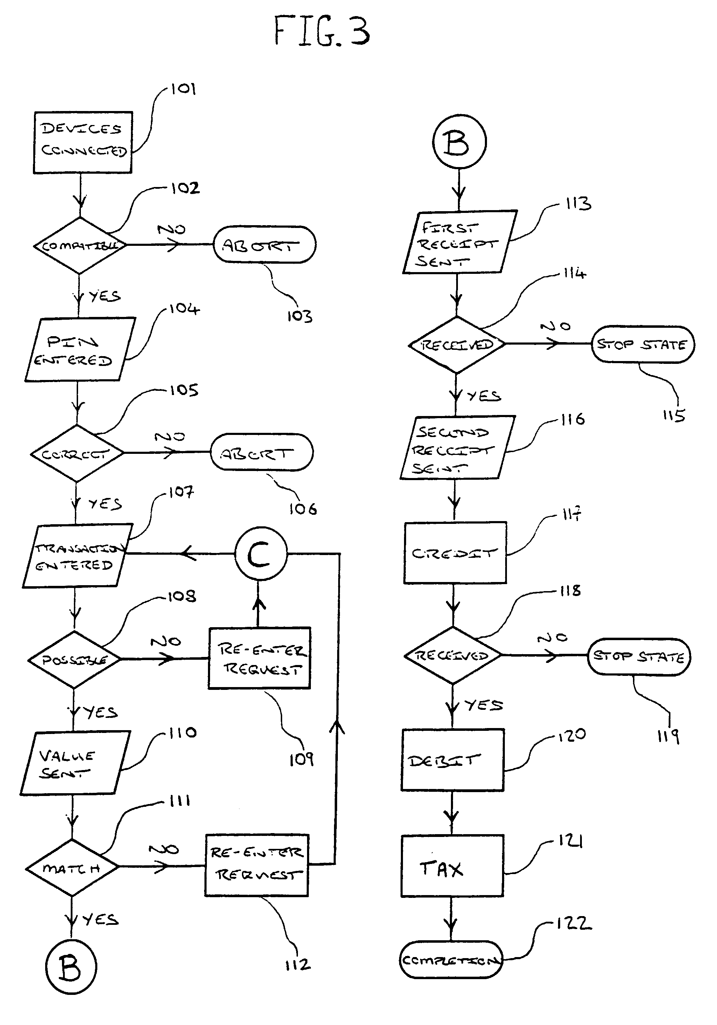

The method of payment is shown in Fig. 3. It conforms to the steps taken in a generalised electronic cash transaction, with the addition of step 121.

In step 101 the smart card 4 is connected to the EPOS 9. The transacting devices verify the other's suitability to undertake an electronic cash transaction in step 102. The smart card 4 uses predetermined recognition routines stored in ROM 15, implemented by a microprocessor 14 to achieve this. Equivalent functions are carried out by similar items in the EPOS 9.

If step 102 yields an incompatibility, the process is aborted in step 103. Otherwise the process continues to step 104, where the user of the smart card 4 proves his or her identity to the card through the use of a PIN. In step 105 the smart card verifies the correctness of the PIN. If the PIN is incorrect the process is aborted at step 106, otherwise the user of the smart card may then enter the instruction to pay X pounds in step 107.

The smart card 4 verifies that the transaction is possible in step 108; in this instance that X is greater than zero and that X + fn(X) is less than or equal to the value of electronic cash stored in memory means 13; where fn(X) is the tax payable on the transaction, and in this instance might be 5% of the value X. If the transaction is not possible the smart card 4 requests re-entry of the value at step 109 and the transaction is then re-entered at step 107.

If the transaction is possible the smart card 4 communicates the transaction value, X, to the EPOS 9 at step 110 and the EPOS 9 verifies that the transaction value sent by the smart card 4 matches the value expected, for instance, the value entered in the EPOS 9 by the operator of the EPOS 9, at step 111. If the values do not match, a request for re-entry of the transaction value is made at step 112 by both devices. The values are re-entered at step 107.

To ensure that the smart card 4 is debited by the sum X and that the EPOS 9 is credited by the sum X, the smart card 4 sends a receipt, at step 113, to the EPOS 9. If the EPOS 9 does not receive the receipt before a predetermined period of time, it enters a stop state at step 115.

Otherwise EPOS 9 responds by sending a return receipt, at step 116, to the smart card 4. Then the EPOS 9 increments its electronic cash memory means by X at step 117. When the smart card 4 receives the return receipt from the EPOS 9 at step 118, the transaction is deemed to be complete and thus the smart card 4 decrements the electronic cash value stored in memory means 13 by X, at step 120. Then the smart card 4 decrements the value of electronic cash stored in the memory means 13 by fn(X), at step 121, thus effecting the taxation of the transaction.

If however the return receipt from EPOS 9 is not received by the smart card 4 before a predetermined period of time, smart card 4 enters a stop state at step 119. Once a stop state has been entered, at step 115 or 199, the device(s) concerned must be shown to a bank, or the issuing authority of the electronic cash, which then decides how the transaction should be completed:
1. If both devices are shown to the bank the transaction is simply finished by connecting the two.
2. If only the smart card 4 is shown to the bank, the smart card 4 is instructed to debit the value of the electronic cash in its memory means 13 by X+fn(X), since the EPOS is either lost or has correctly finished the transaction.
3. If only the EPOS 9 is shown to the bank, it is instructed to cancel the transaction since the smart card 4 will not have finished the transaction.

### SECOND EMBODIMENT

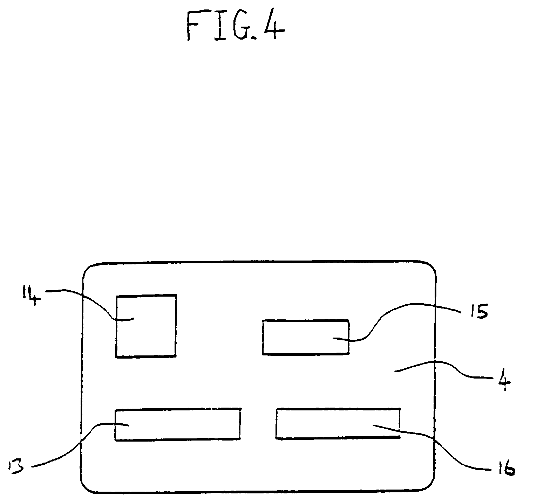

The second embodiment in general fulfils the same function as the first embodiment. In this embodiment however, the smart card 4 comprises a second electronic cash memory means 16 shown in Fig. 4. In Fig. 4 the second electronic cash memory means 16 is schematically represented as a discrete item, but in practice this feature could be provided for by partitioning a single contiguous memory means, for example memory means 13.

According to this second embodiment of the invention, at step 121 of Fig. 3 the value fn(X) is not simply deleted from the electronic cash memory means 13 upon paying X pounds to the EPOS 9, as was the case in the first embodiment. The value fn(X) is instead transferred from the first electronic cash memory means 13 to the second electronic cash memory means 16 on the smart card 4.

Whereas the first memory means 13 of the smart card 4 is accessible to the user to make and receive payments, the second memory means 16 is not accessible to the user. Thus, the total stored in the second electronic cash memory means 16 provides a cumulative tax total on the smart card 4, consisting of the sum of all of the taxable components of each transaction made using the smart card 4.

The contents of the second memory means 16 can be used by the user of smart card 4 in conjunction with expenditure records in dealings with the tax authority.

### THIRD EMBODIMENT

The third embodiment of this invention fulfils the same functions in general terms as the second embodiment. Additionally, however, this embodiment provides for the subsequent transferral of the value held in the second memory means 16 of the smart card 4, via an ATM 10, or other suitable communication means, to the taxation authority bank account 11 as is shown in Fig. 1. Simultaneously, the electronic cash memory means 13 can be replenished from the user's bank account by a requested amount.

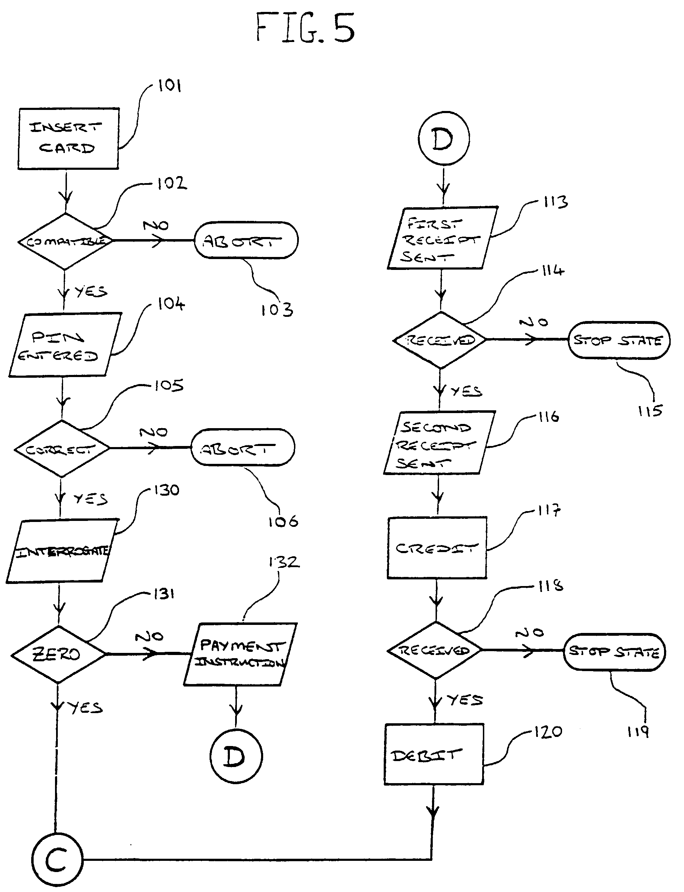

This third embodiment follows the procedure for electronic cash transactions in general terms as shown in Fig. 3. However at a specified point in the transaction, as shown in Fig. 5, the ATM 10 interrogates the microprocessor 14, step 130, of the smart card 4 to ascertain whether the second memory means 16 contains a non-zero value, step 131.

By way of example, step 130 is shown in Fig. 5 to occur after step 105 when the user PIN has been confirmed to be correct. However, this process could occur at any suitable point in the transaction process.

If the value held in memory means 16 is zero then the transaction as described in the second embodiment continues at step 107, where the user enters the transaction. This is represented in Figs. 3 and 5 by connector C.

However, if the value held in the second memory means 16 of the smart card 4 is non-zero, the ATM 10 may initiate a tax payment routine, step 132, where the value held in second memory means 16 is transferred to a tax authority bank account 11.

This routine corresponds to the payment process illustrated in Fig. 3 including steps 113 to 120. Therefore it will not be described further.

At the end of the tax payment routine, step 120 of Fig. 5, the transaction of loading cash from the users electronic bank account 11 on to the smart card 4 via the ATM 10 may be resumed at connector C on Fig. 3.

### FOURTH EMBODIMENT

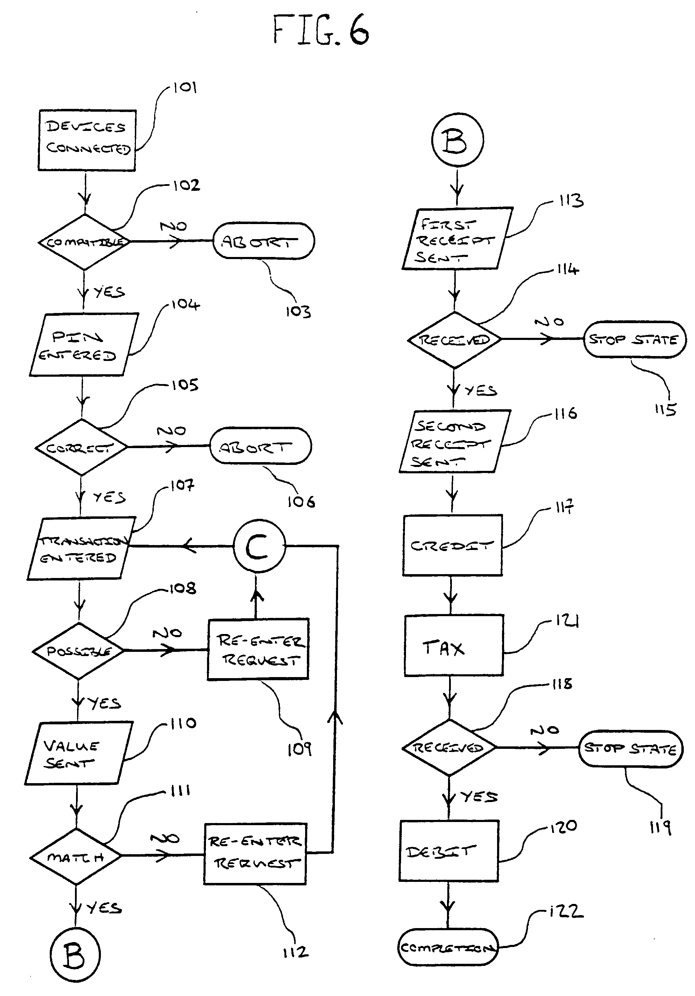

The fourth embodiment of this invention fulfils the same functions as the previous embodiments. However, instead of the taxation being levied on outgoing cash payments, it is levied on incoming cash payments. In this embodiment the taxation point lies in the electronic cash receiving device and occurs after the receipt of the electronic cash. This process is shown in Fig. 6, which conforms to the process of Fig. 3, except that the tax payment step 121 occurs in the receiving device immediately after the credit step 117. Accordingly no tax payment is made by the paying device after the debiting step 120.

### FIFTH EMBODIMENT

The fifth embodiment of the invention fulfils in general terms the same functions as the previous embodiments. However, the current embodiment aims to avoid problems which might otherwise arise in determining which organisation should receive tax paid on a transaction between electronic cash users who pay tax to different organisations. An example of this situation is an electronic cash transaction between individuals of different countries. A further example is a transaction between electronic cash users of compatible electronic cash systems, which use different minting authorities; where the minting authority charges a fee for the use of its electronic cash, in terms of a charge levied upon the transactions undertaken.

Therefore, in the current embodiment, taxation is levied on both incoming payments, as described in the first to third embodiment, and on outgoing payments as described in the fourth embodiment. Therefore, whenever an electronic cash transaction is performed both the paying and the receiving devices decrement a quantity of electronic cash as tax. This may be implemented by deleting a taxable amount as described in the first embodiment, or by a transferring a taxable amount from a first accessible electronic cash memory means to second inaccessible electronic cash memory means as described in the second embodiment. In order that the overall tax payable on each transaction is the same in this embodiment as in previous embodiments, the tax payable may be split equally between payer and payee.

In the previous embodiments, a transaction might occur whereby no tax was paid if the paying device only taxed incoming payments and the receiving device only taxed outgoing payments. Further, in the event that the paying device taxed outgoing payments and the receiving device taxed incoming payments, double the intended quantity of tax may be levied upon a transaction in the previous embodiments. In the current embodiment, neither of these undesirable situations would arise.

### SIXTH EMBODIMENT

The sixth embodiment of the invention generally fulfils the same functions as the first to fifth embodiments.

As is shown in Fig. 1, user 1 may use his or her electronic purse 5 to transfer electronic cash to and from his or her smart card 4 or to a second electronic cash user 2, via their smart card 7.

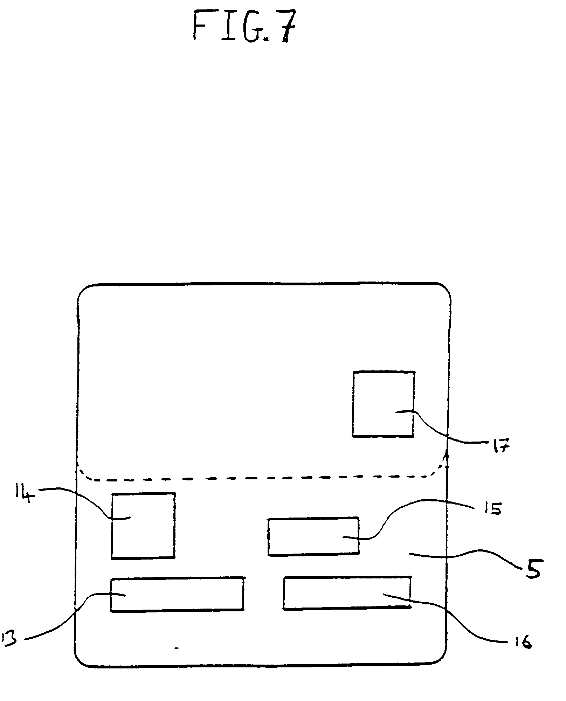

In Fig. 7 an electronic purse is illustrated comprising similar items to the smart card in Fig. 4, which are referenced by the same numerals. In addition to these items the electronic purse comprises a reader 17.

In the present embodiment, the transacting procedure is substantially the same as that described in the first embodiment.

However, care must be taken to avoid implementing a taxation step when one user transfers electronic cash between their smart card and electronic purse; or indeed any two electronic cash storage devices both used by the same individual. Therefore, a user identification subroutine can be implemented between the transacting devices, prior to transfer, which may be implemented, for example, by the electronic purse microprocessor 14, using predetermined recognition routines stored in ROM 15, via the reader 17, which interacts with the microprocessor 14 on the smart card.

This will ensure that when electronic cash is transferred from one device to another, no taxation will be implemented on the transaction when a user identification match between the devices is found.

### SEVENTH EMBODIMENT

The functionality of the previous embodiments can be implemented through hardware means other than a smart card.

The present invention may equally be applied to transactions undertaken via a computer, especially a Personal Computer (PC) 3 or 6, illustrated in Fig. 1, connected to the Internet 12, and the functionality of the previous embodiments is also equally applicable to this seventh embodiment.

In this embodiment, standard computer hardware (well known in the art) is used in conjunction with proprietary software to ensure that the transaction tax is paid. Existing software designed to implement electronic cash payments over computer networks incorporates the required protocols for communications and security, to which only slight adaptation is required to implement this embodiment of the present invention.

This can be achieved in one of two ways: Firstly, the tax payable can be sent via the Internet to a taxation authority bank account, upon undertaking a transaction. Secondly a hardware tax storage device, which is inaccessible to the user, can be attached to the computer terminal, to fulfil the same function as the previously described second memory means 16 in the smart card 4.

### EIGHTH EMBODIMENT

The eighth embodiment generally fulfils the same functions as the first through seventh embodiments. It may be desirable to allow certain classes of transaction to be taxed at different rates from transactions of other classes, or indeed to allow certain transactions to be exempt from tax. This may be achieved by providing those classes of electronic cash users or traders, entitled to pay a particular rate of tax on their transactions, with an EPOS 9, or other transacting means, which ensures that their transactions are taxed at the appropriate rate.

In the event that tax is normally paid by the receiving device, (described in the fourth embodiment) the receiving devices used by traders of goods or services on which no tax, or a low rate of tax is levied, may be programmed on manufacture to pay the appropriate rate of tax.

If the tax is to be paid by the paying device, (described in the sixth embodiment) user identification protocols may be implemented to ensure that the paying device levies a tax on the electronic cash payment in accordance with the tax status of the receiving device.

If, however, tax is to be paid by both the paying and the receiving devices, as described in the fifth embodiment, then both of the above approaches may be implemented simultaneously.

### NINTH EMBODIMENT

In this ninth embodiment, the present invention is not used as a means of solely implementing a transaction tax by a taxation authority, but as a means of charging for the use of the electronic cash or the associated hardware infrastructure. This may be a desirable means of charging for the services provided by, in the first instance, financial institutions or any other electronic cash authorising authority and, in the second instance, communications and electronics companies.

This object may be achieved via the implementation of any of the previous embodiments, thus, at step 121 of Fig. 3 or 6. However, the charging regime may differ from that previous described. A flat rate charge may be imposed on each transaction, for example, or as previously described, a charge, which is a function of the transaction value may be levied on one or other or both of the transacting parties.

The rates at which these services are charged at may vary according to the means by which the transaction is undertaken. For example, referring to Fig. 1 transactions via the Internet 12 may be charged at a higher rate than transactions via an ATM 10.

In practice the charge levied on the users of the system may comprise of several individual charges levied by the hardware manufacturer or equipment lessor, the electronic cash authority and the taxation authority in implementing the previously described transaction tax.

## Claims

1. A device for storing electronic cash and effecting electronic cash transactions, comprising a first memory means (13); characterised in that, said device is arranged to decrement each transaction amount by a value, in a separate operation from said transaction, and the electronic cash total stored in said first memory means (13) corresponds to said decremented transaction amount.

2. A device according to claim 1, in which said value is transferred to an external memory means (11), which is not accessible to the user of said device.

3. A device according to claim 1, in which said value is transferred to a second memory means (16) in said device, which is not accessible to the user of said device.

4. A device according to claim 3, in which the value stored in said second memory means (16) is transferable to an external memory means (11) through the use of suitable communication means (10; 12).

5. A device according to claim 3 or 4, in which said second memory means (16) is a discrete unit in said device.

6. A device according to claim 3 or 4, in which said second memory means (16) is a partitioned area of said first memory means (13).

7. A device according to any one of claims 1 to 6, in which said value is derived from the nature of the transaction.

8. A device according to any one of claims 1 to 6, in which said value comprises a fixed value per transaction.

9. A device according to any one of claims 1 to 6, in which said value is derived from the value of the transaction.

10. A device according to any one of claims 1 to 9, in which said device is the paying means of said transaction.

11. A device according to any one of claims 1 to 9, in which said device is the electronic cash receiving means of said transaction.

12. A device according to any one of claims 1 to 11, in which said device is a smart card.

13. A device according to any one of claims 1 to 11, in which said device is an electronic purse.

14. A device according to any one of claims 1 to 11, comprising a computer connectable to the Internet.

15. A method of levying a charge on an electronic cash transaction comprising the steps of: decrementing the transaction amount by a value, in a separate operation from said transaction, and storing an electronic cash total stored in a first memory means (13) corresponding to the said decremented transaction amount.

16. A method according to claim 15, in which said decremented value is transferred to an external memory means (11), which is not accessible to the user of said device.

17. A method according to claim 15, in which said decremented value is incremented to a second memory means (16) of said device, which is not accessible to the user of said device.

18. A method according to claim 17, in which the contents of said second memory means (16) is transferred to an external memory means (11) upon connection of said device to a communications channel (10; 12).

19. A method according to any one of claims 15 to 18, in which said value is derived from the nature of the transaction.

20. A method according to any one of claims 15 to 18, in which said value is a fixed value per transaction.

21. A method according to any one of claims 15 to 18, in which said value is derived from the value of said transaction.

22. A method according to any one of claims 15 to 18, in which said value comprises one or more fixed values and/or one or more values derived from the value of said transaction.

23. A method according to any one of claims 15 to 22, in which said device is the paying means of said transaction.

24. A method according to any one of claims 15 to 22, in which said device is the electronic cash receiving means of said transaction.

25. A method according to any one of claims 15 to 24, in which said value comprises a tax on expenditure.

26. A method according to any one of claims 15 to 24, in which said value comprises a usage charge.

27. A system for effecting an electronic cash transaction, comprising:
a device according to claim 10, said device being the paying means of said transaction; and,
a device according to claim 11, said device being the receiving means of said transaction.

28. A method of levying a charge on an electronic cash transaction comprising the steps of:
making an electronic cash payment with a device according to claim 10; and
receiving said electronic cash payment with a device according to claim 11.

29. A device for storing electronic cash, which can be used to effect an electronic cash transaction, comprising a first memory means (13); characterised in that, upon undertaking a transaction, the transaction amount is decremented by a value, in a separate operation from said transaction, and the electronic cash total stored in said first memory means (13) corresponds to said decremented transaction amount.
